Europäisches Patentamt

European Patent Office

Office européen des brevets

(19)

(11) Publication number: **0 212 897 B1**

# EUROPEAN PATENT SPECIFICATION

(12)

(45) Date of publication of patent specification: **08.05.91**    (51) Int. Cl.⁵: **G08C 19/02**

(21) Application number: **86305965.5**

(22) Date of filing: **01.08.86**

(54) **On-line serial communication interfaces.**

(30) Priority: **12.08.85 US 764914**

(43) Date of publication of application:
**04.03.87 Bulletin 87/10**

(45) Publication of the grant of the patent:
**08.05.91 Bulletin 91/19**

(84) Designated Contracting States:
**DE FR GB IT SE**

(56) References cited:
**EP-A- 0 101 528**
**US-A- 4 520 488**

(73) Proprietor: **INTERNATIONAL CONTROL AUTO-
MATION FINANCE S.A.**
**16 Rue des Bains**
**Ville de Luxembourg(LU)**

(72) Inventor: **Sterling, Edward Lee, Jr.**
**3380 Warren Road**
**Cleveland Ohio 44111(US)**
Inventor: **Thompson, William Lee**
**15364 GAR Highway**
**Montville Ohio 44064(US)**

(74) Representative: **Cotter, Ivan John et al**
**D. YOUNG & CO. 10 Staple Inn**
**London WC1V 7RD(GB)**

## Description

This invention relates to on-line serial communication interfaces and to methods of establishing on-line serial communication.

Two-wire analog transmission systems are known (see e.g. US-A-4520488). Such systems include a transmitter which is connected to a power supply by two wires which form a current loop. The transmitter includes, as at least one of its features, a transducer which senses a condition such as pressure or temperature. This condition is known as a process variable (PV).

The power supply is connected to the two wires to close the current loop. It is also known to provide a resistor in the current loop. The transmitter amplifies the signal from its transducer and this amplified signal is used to draw a certain current from the power supply which is proportional or otherwise related to the process variable. It is also known to draw from a minimum of 4 mA to a maximum of 20 mA. The current between 4 and 20 mA passes through the resistor to produce a voltage drop across the resistor. This voltage drop can be measured to give a value for the process variable.

It is noted that the 4 mA minimum current is required to energise the circuitry of the transmitter. Any excess current above this 4 mA level is taken as a value which can be used to determine the process variable.

It is known that such 4-20 mA two-wire systems have an accuracy which is limited to around 0.1% at best. These systems are also essentially unidirectional with the transmitter being essentially uncontrolled and transmitting continuously.

The transmitters in such circuits are generally limited in accuracy to about 0.1% and their functionality is limited to only continuous reading and sensing of the process variable.

According to one aspect of the invention there is provided an on-line serial communication interface for communication between a transmitter of a current loop and a digital circuit for receiving voltage pulses, the transmitter being connected by lines of the current loop to a power supply to draw current from the power supply according to a process variable sensed by the transmitter and the transmitter being capable of modulating the current on the current loop by an amount which is small with respect to the current drain, the interface comprising:
a resistor connected in one of the lines of the current loop for establishing a voltage drop on the one line which varies with the modulated current from the transmitter;
a capacitor connected to the one line for receiving the varying voltage drop; and

a comparator having an output and two inputs, one of the inputs being connected to the capacitor and the other of the inputs being connected to a selected small voltage, the comparator being operative to generate voltage pulses on an output thereof which are synchronised with the variations of the voltage drop on the one line, and the output of the comparator being connected to the digital circuit for applying the voltage pulses to the digital circuit.

According to a second aspect of the present invention there is provided an on-line serial communication interface for a digital circuit such as a computer or hand-held terminal, which digital circuit receives voltage pulses, from a current loop having lines for connecting a transmitter to a power supply for drawing current from the power supply according to a process variable sensed by the transmitter and for modulating the current on the current loop, the interface comprising a resistor connected in series in one of the lines of the current loop for establishing a voltage drop on the one line which depends on current drawn by the transmitter, a capacitor connected to the one line for receiving the voltage drop on the one line, the voltage drop being modulated into voltage pulses when the transmitter modulates the current on the one line, and a comparator having an output connected to the digital circuit, and having two inputs, one of the inputs being connected to the capacitor for receiving the voltage pulses and the other input being connected to a selected constant voltage whereby the comparator outputs voltage pulses which are applied to the digital circuit.

According to a third aspect of the invention there is provided a method of establishing on-line serial communication from a terminal of a current loop to a digital circuit for receiving voltage pulses, the terminal being of the type for drawing a current within a selected range corresponding to a process variable sensed by the terminal, the current being drawn on the current loop, the method comprising:
modulating the current drawn by the terminal by an amount which is small with respect to the selected current range;
passing the modulated current through a resistor for establishing a modulated voltage on one line of the current loop;
comparing the modulated voltage to a fixed small voltage compared to the modulated voltage for generating voltage pulses;
amplifying the voltage pulses; and
applying the voltage pulses to the digital circuit.

A preferred embodiment of the present invention described hereinbelow utilises microprocessor technology to improve the overall accuracy and expand the functionality of transmitter devices. The preferred embodiment provides an apparatus for interfacing a computer or hand-held terminal with a current loop for digital communication from a two-wire current loop transmitter while the transmitter is still on-line (sending analog information) to a controller or some other monitoring device. The preferred embodiment provides a serial communication interface between a current loop and a digital circuit which is simple in design, rugged in construction and economical to manufacture.

The invention will now be further described, by way of illustrative and non-limiting example, with reference to the accompanying drawing, in which:

Figure 1 is a block diagram showing a known current loop having a communication device such as a computer or hand-held terminal connected to the current loop; and

Figure 2 is a schematic diagram of an on-line serial communication interface embodying the invention connected between the communication device and the current loop.

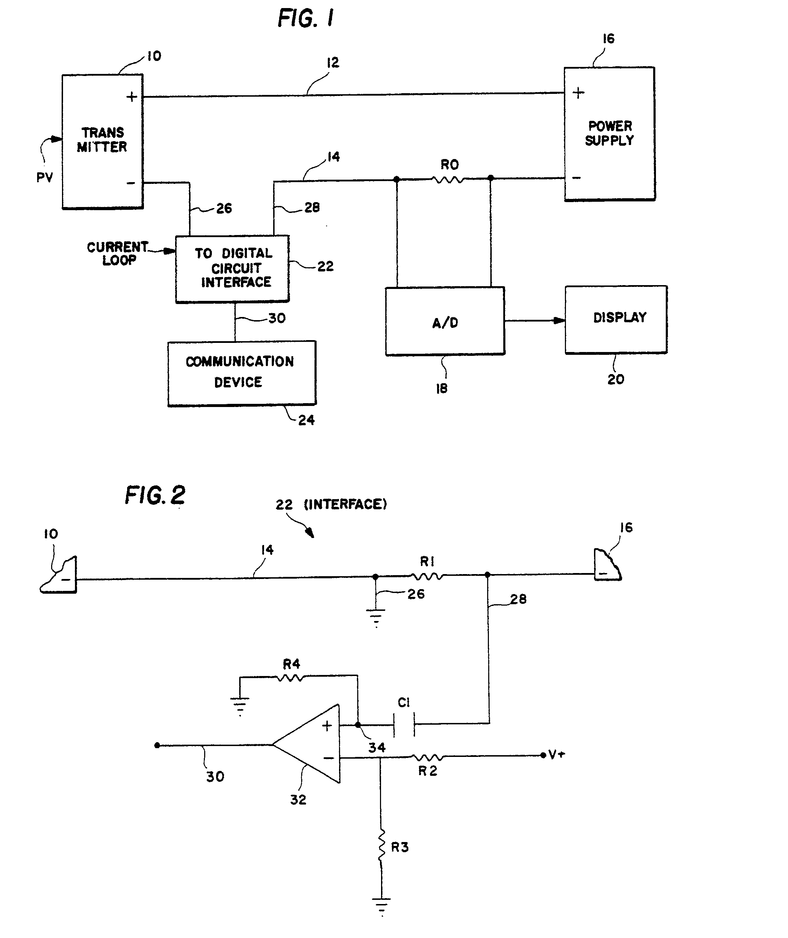

The drawing shows an on-line serial communication interface 22 between a digital circuit, shown in Figure 1 as a communication device 24 (such as an IBM PC, a Radio Shack Model 100 or a Termiflex hand held Terminal) and a current loop formed by a Bailey Controls Company Smart transmitter 10, lines 12,14 and any 12 to 48 Vdc power supply 16. As is known, one of the lines, for example the line 14, may include a resistor R0, which has a voltage drop thereacross proportional to a current flowing in the lines 12,14. The transmitter 10 may include a transducer such as a pressure or temperature transducer (not shown) which receives process variable PV. The transducer may be connected to a microprocessor in the transmitter 10 which controls the amount of current to be drawn from the power supply 16 on the lines 12 and 14.

The voltage drop across the resistor R0 is measured by an analog-to-digital converter 18. This voltage drop can be displayed on a display unit 20 as a measurement of the process variable PV.

The on-line serial communication interface 22 is connected to the current loop line 14 by connecting lines 26 and 28. The communicating or communication device 24 is connected to the serial interface 22 by a line 30. The communicating device 24 is a digital circuit such as a computer, microprocessor, or hand-held terminal. The communicating device 24 receives digital information in the form of voltage pulses on the line 30 for establishing digital communication with the current loop. The communicating device 24 may be an RS-232C device which receives and/or sends a digital signal one bit at a time. A logic high is between +3 and +12 volts, a logic low is between -3 and -12 volts.

Figure 2 illustrates the on-line serial communication interface 22 in more detail.

When the microprocessor or other circuitry of the transmitter 10 is to communicate with the communicating device 24 shown in Figure 1, the transmitter modulates the current on the line 14 by about 1 mA. Depending on the value of a resistor R1, or any other resistor on the line 14, this modulation of current produces a voltage modulation of about 80 mV. This is in the form of voltage pulses which appear at a line 28 connected to the line 14.

A capacitor C1 is connected to the line 28 for receiving the voltage pulses. The voltage pulses are applied to a non-inverting or positive terminal of a comparator or differential amplifier 32. An output of the amplifier 32 is connected to the communicating device 24, for example over the line 30. As noted above, the communicating device 24 may be in the form of a computer or hand-held terminal and is structured to receive and process large voltage pulses for RS-232C communication.

An inverting or negative terminal of the comparator 32 is held slightly positive by a resistive divider circuit made up of resistors R2 and R3. This divider circuit R2,R3 is connected to a source of constant voltage V+. This prevents any noise across the resistor R1 from tripping the comparator 32. It also holds the output of the comparator 32, at the line 30, at earth potential, which is necessary for idle operation of the RS-232C device 24. The comparator 32 converts the 80 mV pulses into large voltage pulses needed for communication with the communication device (digital circuit) 24.

A point 34 is also connected to earth via a resistor R4 for proper functioning of the comparator 32.

A major advantage of the embodiment of the present invention described above is that communication can be achieved while the transmitter is still on-line with a controller. This is possible because there is little effect on the current in the loop. Communication is effected by modulating the current in the loop by a small amount. That is, the current modulation is small with respect to the 4-20 mA current needed for analog communication from the transmitter 10.

Another advantage is that the interface is powered by using a request-to-send line from an RS-232C port of the operator's communicating device 24. No extra power supply is necessary.

## Claims

1. An on-line serial communication interface for communication between a transmitter (10) of a current loop and a digital circuit (24) for receiving voltage pulses, the transmitter (10) being connected by lines (12,14) of the current loop to a power supply (16) to draw current from the power supply (16) according to a process variable (PV) sensed by the transmitter (10) and the transmitter (10) being capable of modulating the current on the current loop by an amount which is small with respect to the current drain, the interface (22) comprising:

a resistor (R1) connected in one of the lines (14) of the current loop for establishing a voltage drop on the one line (14) which varies with the modulated current from the transmitter (10);

a capacitor (C1) connected to the one line (14) for receiving the varying voltage drop; and

a comparator (32) having an output and two inputs, one of the inputs being connected to the capacitor (C1) and the other of the inputs being connected to a selected small voltage, the comparator (32) being operative to generate voltage pulses on an output (30) thereof which are synchronised with the variations of the voltage drop on the one line (14), and the output of the comparator (32) being connected to the digital circuit (24) for applying the voltage pulses to the digital circuit.

2. An interface according to claim 1, for a said digital circuit (24) which comprises an RS-232C computer.

3. An interface according to claim 1 or claim 2, wherein the comparator (32) comprises a differential amplifier for amplifying the variations in voltage drop to produce amplified voltage pulses.

4. An interface according to claim 1, claim 2 or claim 3, for a said current loop which is a 4-20 mA current loop and the transmitter (10) of which is operative to modulate the current by 1 mA, the resistor (R1) being selected so that the voltage drop for a current modulation of 1 mA equals about 80 mV.

5. An interface according to claim 4, including a voltage divider (R2,R3) connected between a voltage source and the other input of the comparator (32).

6. A method of establishing on-line serial communication from a terminal (10) of a current loop to a digital circuit (24) for receiving voltage pulses, the terminal (10) being of the type for drawing a current within a selected range corresponding to a process variable (PV) sensed by the terminal (10), the current being drawn on the current loop, the method comprising:

modulating the current drawn by the terminal (10) by an amount which is small with respect to the selected current range;

passing the modulated current through a resistor (R1) for establishing a modulated voltage on one line (14) of the current loop;

comparing the modulated voltage to a fixed small voltage compared to the modulated voltage for generating voltage pulses;

amplifying the voltage pulses; and

applying the voltage pulses to the digital circuit (24).

7. A method according to claim 6, wherein the range for current drawn by the terminal is from 4 to 20 mA, the transmitter modulates the current by 1 mA, and the resistor (R1) is selected to establish a maximum voltage drop of about 80 mV.

8. A method according to claim 7, including amplifying the voltage pulses to produce an RS-232C digital pulse signal.

**Revendications**

1. Interface de transmission série en ligne pour la transmission entre un émetteur (10) d'une boucle de courant et un circuit numérique (24) pour recevoir des impulsions de tension, l'émetteur (10) étant connecté par des lignes (12, 14) de la boucle de courant à une alimentation (16) pour tirer le courant depuis l'alimentation (16) conformément à une variable de processus (VP) détectée par l'émetteur (10) et l'émetteur (10) étant capable de moduler le courant sur la boucle de courant d'une valeur qui est petite par rapport au courant tiré, l'interface (22) comprenant :

une résistance (R1) connectée à l'une des lignes (14) de la boucle de courant pour établir une chute de tension sur la ligne (14) qui varie avec le courant modulé depuis l'émetteur (10) ;

un condensateur (C1) connecté à la ligne (14) pour recevoir la variation de chute de tension ; et

un comparateur (32) ayant une sortie et deux entrées, une des entrées étant connectée au condensateur (C1) et l'autre des entrées étant connectée à une tension de faible valeur sélectionnée, le comparateur (32) étant adapté à produire des impulsions de tension sur une sortie (30) qui sont synchronisées avec les variations de la chute de tension sur la ligne (14), et la sortie du comparateur (32) étant connectée au circuit numérique (24) pour appliquer les impulsions de tension au circuit numérique.

2. Interface selon la revendication 1, pour ledit circuit numérique (24) qui comprend un ordinateur RS-232C.

3. Interface selon la revendication 1 ou la revendication 2, dans laquelle le comparateur (32) comprend un amplificateur différentiel pour amplifier les variations dans la chute de tension pour produire des impulsions de tension amplifiées.

4. Interface selon la revendication 1, 2 ou 3, pour ladite boucle de courant qui est d'une boucle de courant 4 à 20 mA et dont l'émetteur (10) est adapté à moduler le courant de 1 mA, la résistance (R1) étant sélectionnée de façon que la chute de tension pour une modulation de courant de 1 mA soit égale à environ 80 mV.

5. Interface selon la revendication 4, comprenant un diviseur de tension (R2, R3) connecté entre une source de tension et l'autre entrée du comparateur (32).

6. Procédé d'établissement d'une transmission série en ligne depuis un terminal (10) d'une boucle de courant vers un circuit numérique (24) pour recevoir des impulsions de tension, le terminal (10) étant du type destiné à tirer un courant à l'intérieur d'une plage sélectionnée correspondant à une variable du processus (VP) détectée par le terminal (10), le courant étant tiré sur la boucle de courant, le procédé comportant les opérations consistant à :
moduler le courant tiré par le terminal (10) d'une valeur qui est faible par rapport à la plage de courant sélectionnée ;
passer le courant modulé à travers une résistance (R1) pour établir une tension modulée sur une ligne (14) de la boucle de courant ;
comparer la tension modulée à une faible tension fixe comparée à la tension modulée pour produire des impulsions de tension ;
amplifier les impulsions de tension ; et
appliquer les impulsions de tension au circuit numérique (24).

7. Procédé selon la revendication 6, dans lequel la plage pour le courant tiré par le terminal est de 4 à 20 mA, l'émetteur module le courant de 1 mA, et la résistance (R1) est sélectionnée pour établir une chute de tension maximale d'environ 80 mV.

8. Procédé selon la revendication 7, comprenant l'amplification des impulsions de tension pour produire un signal d'impulsion numérique aux normes RS-232C.

**Ansprüche**

1. Serielles on-line-Kommunikationsinterface für die Kommunikation (Informationsaustausch) zwischen einem Sender (10), einer Stromschleife und einem digitalen Schaltkreis (24) für den Empfang von Spannungsimpulsen, wobei der Sender (10) über Leitungen (12, 14) über die Stromschleife an eine Stromquelle (16) angeschlossen ist, um Strom aus der Stromquelle (16) gemäß einer Prozeßvariablen (PV) zu ziehen, die von dem Sender (10) erfaßt wird, und wobei der Sender (10) in der Lage ist, den Strom in der Stromschleife um einen Betrag zu modulieren, der bezogen auf den Stromabfluß gering ist, wobei das Interface (22) aufweist:
einen Widerstand (R1), der in einer der Leitungen (14) der Stromschleife angeschlossen ist, um einen Spannungsabfall auf der einen Leitung (14) bereitzustellen, der sich mit den von dem Sender (10) modulierten Strom verändert, einen Kondensator (C1), der an die eine Leitung (14) angeschlossen ist, um den sich verändernden Spannungsabfall aufzunehmen, und einen Vergleicher bzw. Komparator (32), der einen Ausgang und zwei Eingänge hat, wobei einer der Eingänge mit dem Kondensator (C1) und der andere der Eingänge mit einer ausgewählten kleinen Spannung verbunden ist, wobei der Komparator (32) so betreibbar ist, daß er Spannungsimpulse an seinem Ausgang (30) erzeugt, die mit den Veränderungen des Spannungsabfalls in der einen Leitung (14) synchronisiert sind, und wobei der Ausgangs des Komparators (32) mit dem digitalen, Schaltkreis (24) verbunden ist, um dem digitalen Schaltkreis die Spannungsimpulse zuzuführen.

2. Interface nach Anspruch 1 für den erwähnten digitalen Schaltkreis (24), welcher einen RS-232C-Computer aufweist.

3. Interface nach Anspruch 1 oder 2, wobei der Komparator (32) einen Differentialverstärker für die Verstärkung der Veränderungen des Spannungsabfalls aufweist, um verstärkte Spannungsimpulse zu erzeugen.

4. Interface nach Anspruch 1, 2 oder 3 für die Stromschleife, welche eine 4 - 20 mA-Stromschleife ist und wobei der Sender (10) derselben so betreibbar ist, daß er den Strom um 1 mA moduliert, wobei der Widerstand (R1) so ausgewählt ist, daß der Spannungsabfall für eine Strommodulation von 1 mA etwa 80 mV beträgt.

5. Interface nach Anspruch 4, einschließlich eines Spannungsteilers (R2, R3), der zwischen einer Spannungsquelle und dem anderen Eingang des Komparators (32) angeschlossen ist.

6. Verfahren zum Bereitstellen einer seriellen on-line-Kommunikation von einem Anschluß (10) einer Stromschleife zu einem digitalen Schaltkreis (24) für den Empfang von Spannungsimpulsen, wobei der Anschluß (10) von der Art ist, die einen Strom, der einer Prozeßvariablen (PV), welche von dem Anschluß (10) abgefühlt wird, innerhalb eines ausgewählten Bereiches zieht, wobei der Strom in der Stromschleife gezogen wird, und wobei das Verfahren aufweist:
Modulieren des von dem Anschluß (10) gezogenen Stromes um einen Betrag, der in Bezug auf den ausgewählten Strombereich klein ist,
Hindurchleiten des modulierten Stromes durch einen Widerstand (R1) zum Bereitstellen einer modulierten Spannung auf einer Leitung (14) der Stromschleife,
Vergleichen der modulierten Spannung mit einer festen kleinen Spannung im Vergleich zu der modulierten Spannung, um Spannungsimpulse zu erzeugen,
Verstärken der Spannungsimpulse, und
Aufbringen der Spannungsimpulse auf den digitalen Schaltkreis (24).

7. Verfahren nach Anspruch 6, wobei der Bereich für den durch den Anschluß gezogenen Strom von 4 - 20 mA reicht, wobei der Sender den Strom um 1 mA moduliert und der Widerstand (R1) so ausgewählt ist, daß er einen maximalen Spannungsabfall von etwa 80 mV bereitstellt.

8. Verfahren nach Anspruch 7, einschließlich des Verstärkens der Spannungsimpulse, um eine digitales RS-232C-Impulssignal zu erzeugen.

EP 0 212 897 B1

## FIG. 1

## FIG. 2